# EUROPÄISCHE PATENTANMELDUNG

(11) **EP 1 935 580 A1**
(43) Veröffentlichungstag der Anmeldung: **25.06.2008**
(21) Anmeldenummer: 07019232.3
(22) Anmeldetag: 01.10.2007
(51) Int. Cl.: B25J 15/04

(54) **Anordnung zum Schnellwechseln von Werkzeugen an einem Roboterarm**

(30) Priorität: 22.12.2006 CH 20922006
(71) Anmelder: Wasag-Tool AG, 5036 Oberentfelden (CH)
(72) Erfinder: Bobst, Max, 4500 Solothurn (CH)
(74) Vertreter: Schaad, Balass, Menzl & Partner AG

(57) **Zusammenfassung**

Die Anordnung zum Schnellwechseln von Werkzeugen an einem Roboterarm besteht aus einem am Roboterarm drehbaren Antriebsschhaft (1) und einem ein Werkzeug tragenden Werkzeugträger (2). Sowohl der Antriebsschaft (1) als auch der Werkzeugträger (2) sind mit je einem mit Sägezähnen (3) versehenen Zahnring (4, 5) ausgerüstet, die in der Betriebsstellung ineinandergreifen. Jeder Sägezahn (3) weist eine axial gerichtete Steilflanke (6) und eine dieser abgekerte Schrägflanke (7) auf. Die in der Betriebsstellung anstossenden Steilflanken (6) dienen zur Kraftübertragung. Die beim Umkehr der Drehrichtung aneinanderstossenden Schrägflanken (7) rutschen auseinander und begünstigen die Trennung zwischen Antriebsschaft (1) und Werkzeugträger (2). Die Längsverriegelung des Werkzeugträgers (2) in der Betriebsstellung erfolgt durch mehrere radial verschiebbare, drehbare Halteköpfe (8), die am Gehäuse (10) des Antriebsschaftes (1) abgestützt sind. Die Längsverschiebung der Halteköpfe (8) erfolgt hydraulisch oder pneumatisch.

## Beschreibung

Die vorliegende Erfindung betrifft eine Anordnung zum Schnellwechseln von Werkzeugen an einem Roboterarm mit einem durch den Roboter antreibbaren Antriebsschaft und mit einem das Werkzeug tragenden Werkzeugträger, die in der Betriebsstellung ineinandergreifen.

Aus der DE-A1-3713056 ist eine Schnellwechselanordnung für Werkzeugträger an einem Roboter bekannt. Diese Anordnung umfasst eine Klemmanodnung mit einem Zentralstück, welches an einem Arm befestigt ist und sich in Längsrichtung erstreckt, wobei zwei gegenüberliegende Klemmbauteile für ein Querleiten auf dem Zentralstück montiert sind. Ein Werkzeugträgerbauteil ist in der Klemmeinrichtung gehalten, wenn diese geschlossen ist, wobei sich in Querrichtung zu den Klemmbauteilen Stifte erstrecken, die mit Beinen des Werkzeugträgerbauteiles in Eingriff stehen. Das Trägerbauteil und die Klemmbauteile weisen Leitungsabschnitte auf, die kontinuierliche Fluidleitungen und einen elektrischen Leitungsweg bilden und darstellen, wenn das Trägerbauteil in der Klemmanordnung gesichert ist. Bei dieser Anordnung ist am Roboterarm eine kostspielige Klemmanordnung befestigt. Beim Werkzeugwechseln muss die Klemmanordnung und das Werkzeugträgerbauteil genau positioniert werden, sonst können diese Bauteile nicht ineinandergreifen. Zu diesem Zweck ist eine Zusatzeinrichtung erforderlich. Aus diesen Gründen ist diese Anordnung kompliziert und mit hohen Kosten verbunden.

Aufgabe der vorliegenden Erfindung ist es, eine Anordnung zum Schnellwechseln von Werkzeugen an einem Roboterarm zu entwickeln, die das Schnellwechseln von Werkzeugen mit einfachen und kostengünstigen Mitteln erlaubt.

Die gestellte Aufgabe ist dadurch gelöst, dass sowohl der Antriebsschaft als auch der Werkzeugträger einen mit Sägezähnen versehenen Zahnring tragen, die in der Betriebsstellung ineinandergreifen, wobei jeder Sägezahn eine axial gerichtete Steilflanke und eine dieser abgekehrte Schrägflanke aufweist, wobei die gegenüberliegenden Steilflanken in der Betriebsstellung zur Kraftübertragung aneinaderstossen und die gegenüberliegenden Schrägflanken bei umgekehrten Drehrichtung des Antriebsschaftes unter einer axialen Verschiebeung zwischen Antriebsschaft und Werkzeugträger auseianderrutschen um eine Trennung des Werkzeugträgers vom Antriebsschaft zu erleichtern, wobei die Längsverriegelung zwischen dem Antriebsschaft und dem Werkzeugträger durch mehrere radial verschiebbare, in der Betriebsstellung am Gehäuse des Antriebsschaftes abgestützte, drehbare Halteköpfe erfolgt. Diese Massnahmen ermöglichen ein Werzeugwechsel ohne genaue Positionierung des Antriebsschaftes in Bezug auf den Werkzeugträger, eine sichere Kopplung der kraftübertragenden Steilflanken dank der Führung der Schrägflanken und eine erleichterte Trennung des Antriebsschaftes vom Werkzeugträger dank der Schrägflanken bei umgekehrten Drehrichtung des Antriebsschaftes.

Jeder Haltekopf ist mit Vorteil auf einem im Gehäuse des Antriebsschaftes radial geführten, hydraulisch und/oder pneumatisch längsverschiebbaren Träger drehbar gelagert. Die Trägerwelle ist durch einen am Gehäuse des Antriebsschaftes angebrachten hydraulischen oder pneumatischen Antrieb radial verschiebbar.

Im folgenden werden anhand der beiliegenden Zeichnungen Ausführungsbeispiele der Erfindung näher beschrieben. Es zeigen:
- Fig.1: eine schematische Darstellung einer Schnellwechselanordnung mit noch getrennten konischen Antriebsschaft und Werkzeugträger,
- Fig.2: die gleiche Anordnung mit ineinandergegriffenen Antriebsschaft und Werzeugträger,
- Fig.3: eine schematische Darstellung einer Schnellwechselanordnung mit einem zylindrischen Antriebsschaft in der getrennten Stellung.

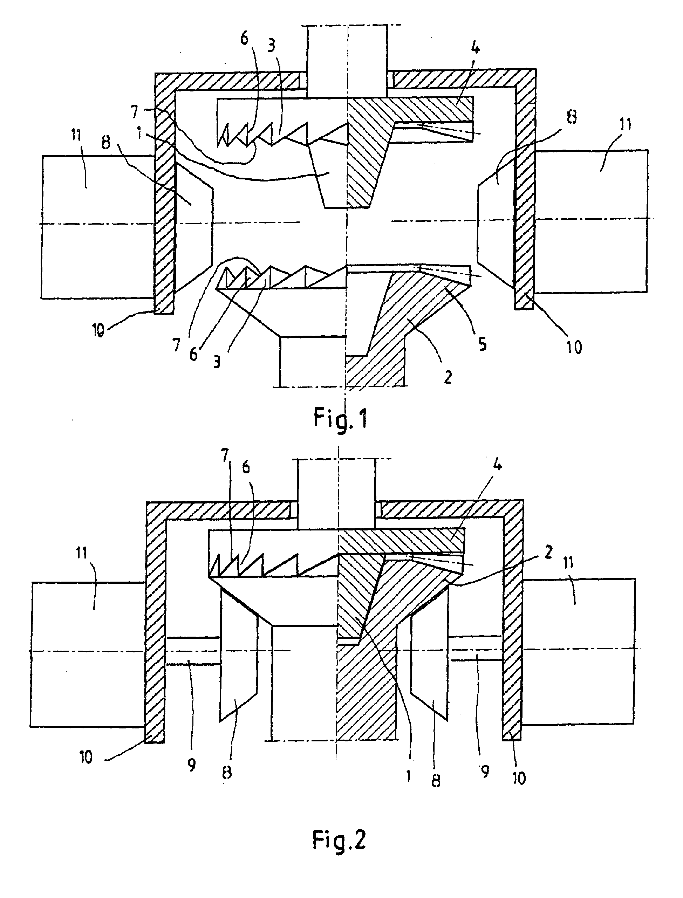

In Fig.1 ist der durch den nicht dargestellten Roboter antreibbare Antriebsschaft 1 konisch augebildet. Der gegenüberliegenden Werkzeugträger 2 ist für die Aufnahme des konisch ausgebildeten Antriebsschaftes 1 vorgesehen. Sowohl der Antriebsschaft 1 als auch der Werkzeugträger 2 tragen einen mit Sägezähnen 3 versehenen Zahnring 4, 5. Jeder Sägezahn 3 weist eine axial gerichtete Steilflanke 6 und eine dieser abgekehrte Schrägflanke 7 auf. Die Steilflanken 6 stossen in der Betriebsstellung aneinander und dienen zur Kraftübertragung. Bei Umkehr der Drehrichtung des Antriebsschftes 1 rutschen die Schrägflanken 7 auseinander und bewirken eine axiale Verschiebung zwischen Antriebsschaft 1 und Werkzeugträger 2, wodurch die Trennung zwischen Ihnen erleichtert ist.

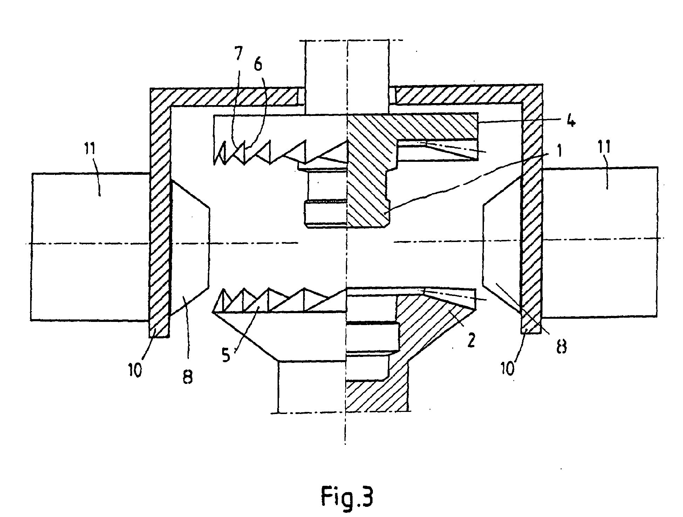

In Fig.3 ist eine Schnellwechselanordnung in der getrennten Stellung mit einem zylindrischen Antriebsschaft 1 schematisch dargestelltt. Die übrigen Teile sind gleich wie in Fig.1 gezeigt.

Die Längsverriegelung zwischen dem Antriebsschaft und dem Werkzeugträger 2 erfolgt durch mehrere radial verschiebbare, drehbare Halteköpfe 8, Fig. 1, 2, 3,. Die Halteköpfe 8 sind an je einer Trägerwelle 9 drehbar gelagert und durch je einen am Roboterarm befestigten Gehäuse 10 des Antriebsschaftes 1 anliegenden hydraulischen oder pneumatischen Antrieb 11 in radialer Richtung verschiebbar. In der getrennten Stellung, Fig. 1 und 3 stehen die Halteköpfe 8 zurück und in der Betreibsstellung, Fig. 2 stützen die Halteköpfe 8 den Werkzeugträger 2 in Richtung des Antriebsschaftes 1.

## Patentansprüche

1. Anordnung zum Schnellwechseln von Werkzeugen an einem Roboterarm mit einem durch den Roboter antreibbaren Antriebsschaft (1) und mit einem das Werkzeug tragenden Werkzeugträger (2), die in der Betriebsstellung ineinandergreifen, **dadurch gekennzeichnet, dass** sowohl der Antriebsschaft (1) als auch die Werkzeugträger (2) einen mit Sägezähnen (3) versehenen Zahnring (4, 5) tragen, die in der Betriebsstellung ineinandergreifen, wobei jeder Sägezahn (3) eine axial gerichtete Steilflanke (6) und eine dieser abgekehrte Schrägflanke (7) aufweist, wobei die gegenüberliegenden Steilflanken (6) in der Betriebsstellung zur Kraftübertragung aneinaderstossen und die gegenüberliegenden Schrägflanken (7) bei umgekehrten Drehrichtung des Antriebsschaftes (1) unter einer axialen Verschiebung zwischen Antriebsschaft (1) und Werkzeugträger (2) auseianderrutschen um eine Trennung des Werkzeugträgers (2) vom Antriebsschaft (1) zu erleichtern, wobei die Längsverriegelung zwischen dem Antriebsschaft (1) und dem Werkzeugträger (2) durch mehrere radial verschiebbare, in der Betriebsstellung am Gehäuse (10) des Antriebsschaftes (1) abgestützte, drehbare Halteköpfe (8) erfolgt.

2. Anordnung nach Anspruch 1, **dadurch gekennzeichnet, dass** jeder Haltekopf (8) auf einem im Gehäuse (10) des Antriebsschaftes (1) radial geführten, pneumatisch längsverschiebbaraen Trägerwelle (9) drehbar gelagert ist.

3. Anordnung nach Anspruch 1, **dadurch gekennzeichnet, dass** jeder Haltekopf (8) auf einem im Gehäuse (10) des Antriebsschaftes (1) radial geführten, hydraullisch längsverschiebbaraen Trägerwelle (9) drehbar gelagert ist.
